# DEMANDE DE BREVET EUROPEEN

(11) **EP 1 842 605 A2**
(43) Date de publication de la demande: **10.10.2007**
(21) Numéro de dépôt: 07300789.0
(22) Date de dépôt: 13.02.2007
(51) Int. Cl.: B21D 53/88, B62D 65/00

(54) **Procédé de réalisation d'au moins deux pièces embouties et panoplie de pièces embouties obtenue par ce procédé**

(30) Priorité: 30.03.2006 FR 0651118
(71) Demandeur: PEUGEOT CITROËN AUTOMOBILES S.A., 78140 Velizy Villacoublay (FR)
(72) Inventeur: Faivre, Philippe, 25600, VIEUX-CHARMONT (FR)
(74) Mandataire: Gendraud, Pierre

(57) **Abrégé**

L'invention concerne un procédé de réalisation d'au moins deux pièces (11, 13) embouties pour l'assemblage d'au moins une partie d'un véhicule automobile. Les pièces (11, 13) sont réalisées à l'emboutissage dans un même outillage et de manière à former ensemble une panoplie (10) de pièces embouties non entièrement séparées pour pouvoir être transportées comme un élément monolithique, et en ce que les pièces (11, 13) sont séparées seulement au moment de l'assemblage, par un moyen appartenant à des moyens d'assemblage.

L'invention concerne également une panoplie de pièces embouties réalisées selon ce procédé.

## Description

La présente invention concerne un procédé de réalisation d'au moins deux pièces embouties et une panoplie de pièces embouties obtenue par un tel procédé.

La présente invention s'applique plus particulièrement à la réalisation de sous ensembles dans le domaine des véhicules automobiles. Toutefois, la présente invention peut tout aussi bien s'adapter à d'autres domaines techniques où il s'agit de réaliser des sous ensembles ou des ensembles à partir d'une pluralité de pièces obtenues par emboutissage.

En effet, pour illustrer la situation de départ à l'aide d'exemples pris dans le domaine des véhicules automobiles, lorsqu'il s'agit d'assembler une porte, un capot ou par exemple un volet arrière, à partir d'éléments en tôle obtenus par emboutissage, il arrive souvent que les différentes pièces brutes sont réalisées par emboutissage à l'aide d'outils spécifiques disposés à différents endroits d'une usine, voire même dans différentes usines. Ces répartitions sont généralement déterminées en fonction des presses disponibles et en fonction de la taille des presses nécessaires pour certaines pièces. Il n'est ainsi pas rare que les pièces brutes d'un même véhicule, parfois même d'un même sous-ensemble, sont réalisées dans des sites d'emboutissage géographiquement très éloignés.

Cette organisation du travail d'emboutissage entraîne un certain nombre de désavantages auquel il convient de remédier. Ainsi, par exemple, l'emboutissage de pièces se fait généralement par des grands lots selon un planning ayant pour but d'optimiser l'exploitation de chacune des presses. Pour cette raison, il n'est pas toujours facile de réagir à des variations de demandes instantanées.

Par ailleurs, lorsque des presses ou des lignes de presses sont robotisées, le conditionnement des pièces obtenues par emboutissage est également automatisé. De plus, le conditionnement de ces pièces se détermine généralement non seulement selon le type de produit, mais aussi selon la distance et les moyens de transport par lesquels les pièces doivent être acheminées au lieu d'assemblage.

Un autre inconvénient est que la matière à partir de laquelle les pièces embouties sont obtenues est souvent faiblement exploitée, phénomène qui est souvent exprimé par un coefficient d'utilisation des matières qui met en rapport la masse net de pièces obtenues par rapport à la masse brut de matière utilisée pour l'emboutissage. Ce coefficient est souvent de l'ordre de 50% seulement.

En ce qui concerne le transport proprement dit des pièces entre leur lieu de fabrication et le lieu où elles sont assemblées avec d'autres pièces, les pièces brutes sont conditionnées soit manuellement soit de façon robotisée, dans des conteneurs qui, suivant le type de pièces brutes, sont spécifiques, notamment lorsqu'il s'agit de pièces d'aspect ou de doublure influant sur la géométrie, ou sont des conteneurs standards, notamment lorsqu'il s'agit de petites pièces de renfort. Ces conteneurs sont transportés soit entre deux ateliers dans le même cite soit entre différents cites, et sont ensuite stockés dans les magasins en attendant d'être appelés selon le programme d'assemblage de sous-ensembles.

Il s'ensuit que la réalisation actuelle de pièces embouties ne pose pas seulement un problème d'emboutissage proprement dit, mais aussi un problème logistique. En effet, aussi bien le transport que le stockage des pièces nécessite une gestion assez importante dont l'ampleur a été augmentée assez sensiblement en raison du principe de logistique de "just in time" c'est-à-dire une livraison de pièces à un site d'assemblage le moins de temps possible avant l'utilisation des pièces.

Un stockage même de courte durée ne pouvant être évité, et les conteneurs ne pouvant très souvent pas être de dimensions standards, il y a aussi une gestion de surface de stockage assez importante.

Et lorsque, enfin, les conteneurs avec les pièces embouties sont livrés au site d'assemblage ou à l'atelier d'assemblage, les pièces embouties doivent être déchargées soit manuellement, soit de façon robotisée et acheminées à des unités d'assemblage selon le type de travail à effectuer (soudage, sertissage, etc.). Il y a donc à l'atelier ou au site d'assemblage la gestion du déchargement des pièces brutes et la mise en place dans le moyen d'assemblage. Ces travaux impliquent généralement aussi une gestion de surface d'entreposage.

La réalisation de pièces embouties et notamment l'assemblage de sous-ensembles à partir de telles pièces embouties nécessite un nombre assez important de manipulations, de gestion et d'acheminement avec, en même temps, une exploitation souvent insatisfaisante de la matière brute.

Le but de l'invention est de remédier aux inconvénients décrits ci avant.

Le but de l'invention est atteint avec un procédé de réalisation d'au moins deux pièces embouties pour l'assemblage d'au moins une partie d'un véhicule automobile.

Conformément à l'invention, les pièces sont réalisées à l'emboutissage dans un même outillage et de manière à former ensemble une panoplie de pièces embouties non entièrement séparées pour pouvoir être transportées comme un élément monolithique, les pièces étant séparées seulement au moment de l'assemblage, par un moyen appartenant à des moyens d'assemblage.

Le but de l'invention est également atteint avec une panoplie de pièces embouties obtenues par un tel procédé.

Le procédé de l'invention, et la panoplie de pièces obtenues par la mise en oeuvre de ce procédé diffèrent très sensiblement de ce qui se fait traditionnellement, par le fait que
- différentes pièces brutes sont réalisées à l'emboutissage dans un même outillage,
- les pièces brutes ne sont pas séparées en fin de l'emboutissage, mais sont conditionnées attachées ; elles forment ainsi une panoplie de pièces conformée pour pouvoir être transportée et manipulée comme un élément monolithique ;
- les pièces embouties restent donc attachées entre elles de façon rigide pendant le transport entre le site d'emboutissage et le site d'assemblage et
- ce n'est qu'après déchargement, et plus précisément au moment de l'assemblage seulement, que les pièces brutes constituant la panoplie sont séparées par un moyen appartenant aux moyens d'assemblage.

Puisque les moyens d'assemblage ne comportent généralement pas de moyens d'évacuation des chutes, les pièces sont avantageusement réalisées de manière à rester reliées les unes aux autres au sein de la panoplie de pièces par des pattes de fixation dont les dimensions se limitent à un stricte minimum nécessaire pour pouvoir séparer les pièces sans les déformer.

Ces pattes de fixation peuvent être essentiellement de deux natures différentes. Selon la première, elles sont complètement intégrées à l'une des pièces à relier ; dans ce cas, la séparation des pièces ne génère pas de chutes. Selon la seconde nature, les pattes de fixation ne sont intégrées à aucune des pièces à relier, mais forment des pattes d'attache ; dans ce cas, la séparation des pièces génère des chutes égales aux pattes d'attache entre les pièces.

Accessoirement, le fait de réaliser une panoplie de pièces destinées à former, après assemblage, une partie ou un sous-ensemble d'un véhicule automobile, facilite, au moins partiellement, le positionnement des pièces à assembler dans les moyens d'assemblage. Ceci est valable aussi bien dans le cas d'un assemblage par soudage que dans celui d'un soudage par sertissage ou par tout autre procédé d'assemblage.

D'autres caractéristiques et avantages de la présente invention ressortiront de la description ci-après de cinq panoplies de pièces embouties obtenues par un procédé de réalisation tel que décrit ci avant. La description est fait en référence aux dessins annexés dans lesquels :
- la figure 1 représente une panoplie de pièces pour un capot d'un véhicule automobile,
- la figure 2 représente une panoplie de pièces pour une première porte d'un véhicule automobile ;
- la figure 3 représente une panoplie de pièces pour une porte avant d'un véhicule automobile ;
- la figure 4 représente une panoplie de pièces pour une porte arrière d'un véhicule automobile et
- la figure 5 représente une panoplie de pièces pour un volet arrière d'un véhicule automobile.

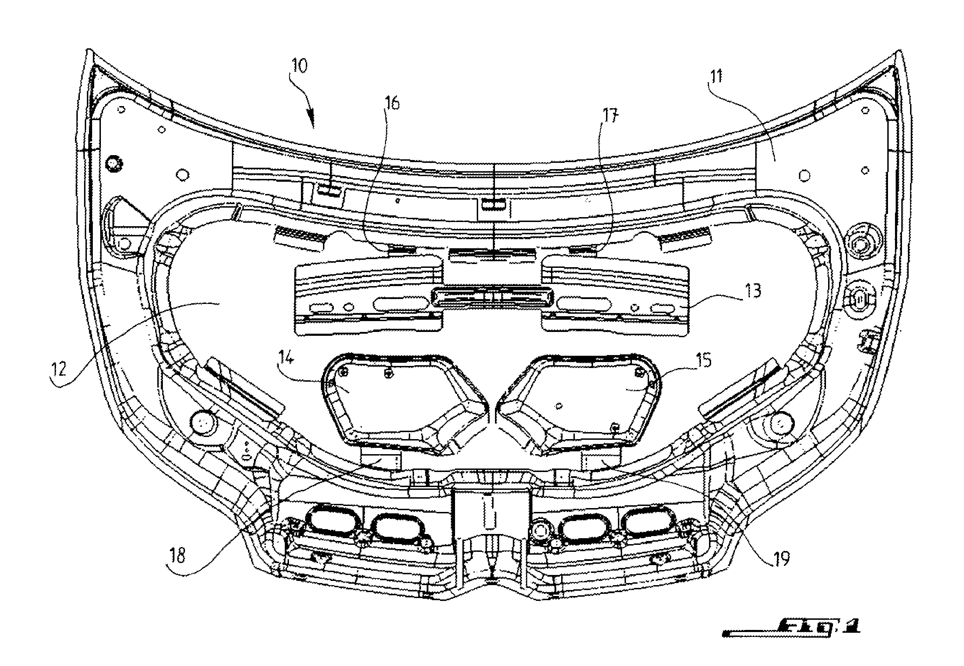

La figure 1 représente une panoplie de pièces embouties destinée à un capot d'un véhicule automobile.

Le capot proprement dit étant une pièce d'aspect et généralement pleine, elle ne se prêtera pas à former, avec d'autres pièces, une panoplie de pièces. Contrairement à cela, les éléments de doublage, de raidissement et de renfort se prêtent très bien à être emboutis ensemble de manière à former une panoplie de pièces selon l'invention. En effet, l'une de ces pièces présentant en général un évidement ou une forme courbe, la matière destinée à être enlevée par l'emboutissage servira à en former les autres pièces de la panoplie.

Ainsi, la figure 1 représente une première panoplie de pièces 10 dont les pièces sont destinées à former ensemble, avec une pièce d'aspect correspondante, un capot pour un véhicule automobile. La panoplie 10 comprend à cet effet une doublure de capot 11 reprenant au moins approximativement les contours du capot à réaliser et présentant un évidement 12. La matière destinée à être enlevée lors de l'emboutissage pour former cet évidement 12 est utilisée pour réaliser, par emboutissage, un raidisseur de capot 13, un renfort d'articulation droit 14 de capot et un renfort d'articulation gauche 15 de capot. Le raidisseur de capot 13 reste attaché à la doublure de capot 11 par deux pattes de fixation 16, 17 et les deux renforts d'articulation droit et gauche 14, 15 restent attachés à la doublure de capot 11 par deux pattes de fixation 18, 19.

On notera que les pattes de fixation 16, 17 sont relativement courtes grâce à la géométrie simple du raidisseur de capot 13 et à la forme relativement droite de la doublure de capot 11 à cet endroit. Contrairement à cela, les pattes de fixation 18, 19 sont relativement longues et larges en raison de la forme courbe de la doublure de capot 11 à cet endroit et pour assurer le maintien des renforts 14, 15, non reliés entre eux, par rapport à la doublure 11 pendant des manipulations de la panoplie 10.

La figure 1 illustre que la seule contrainte de disposition à laquelle les pièces de la panoplie sont soumises, est le bilan économique engendré par la panoplie. En effet, une panoplie n'est viable économiquement que si l'utilisation de la matière de la pièce principale, ici la doublure de capot 11, n'est pas dégradée par la disposition des autres pièces. Ce point excepté, la disposition des autres pièces les unes par rapport aux autres de la panoplie de pièces est liée à la faisabilité pure de chacune des pièces.

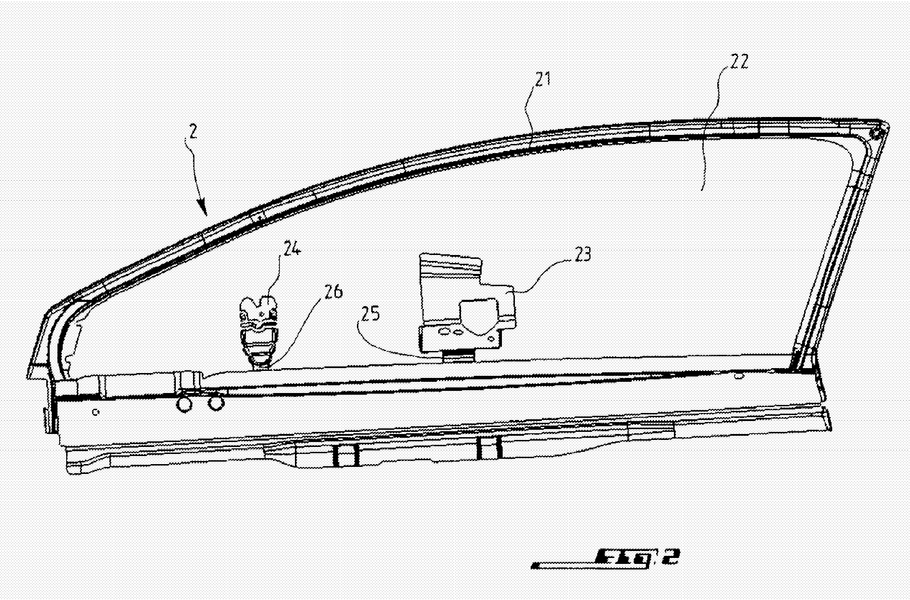

La figure 2 représente une panoplie 20 de pièces destinée à former un encadrement de porte pour un premier modèle d'un véhicule automobile.

La panoplie de pièces 20 comprend un encadrement de porte 21 respectivement pour une porte droite ou pour une porte gauche. Cet encadrement de porte 21 présente un évidement 22 correspondant à l'emplacement d'une vitre. La matière destinée à être enlevée, par emboutissage, pour former cet évidement 22 est utilisée en partie pour réaliser, par emboutissage, un renfort de serrure 23 et un support 24 de lève-vitre pour cette porte. Le renfort de serrure 23 et le support de lève-vitre 24 restent attachés à l'encadrement de porte 21 par des pattes de fixation 25, 26.

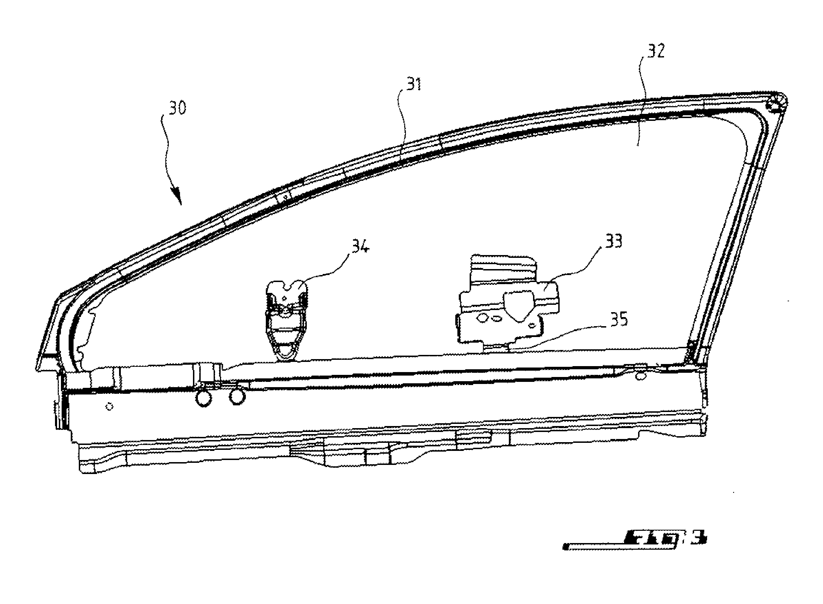

La figure 3 montre une panoplie de pièces 30 pour une porte avant d'un véhicule automobile. La panoplie de pièces 30 comprend un encadrement de porte avant 31 avec un évidement 32. La matière destinée à être enlevée, par emboutissage, pour former l'évidement 32 est utilisée en partie pour réaliser, par emboutissage, un renfort de serrure 33 de porte avant et un support 34 d'une vitre pour cette porte avant.

On notera que dans la panoplie 30, seul le renfort de serrure 33 reste attaché à l'encadrement de porte avant 31 par une patte de fixation 35. Contrairement à cela, le support de la vitre 34 reste attaché, grâce à sa forme particulière, quasi directement à l'encadrement de porte avant 31 sa forme permettant de renoncer à une patte de fixation.

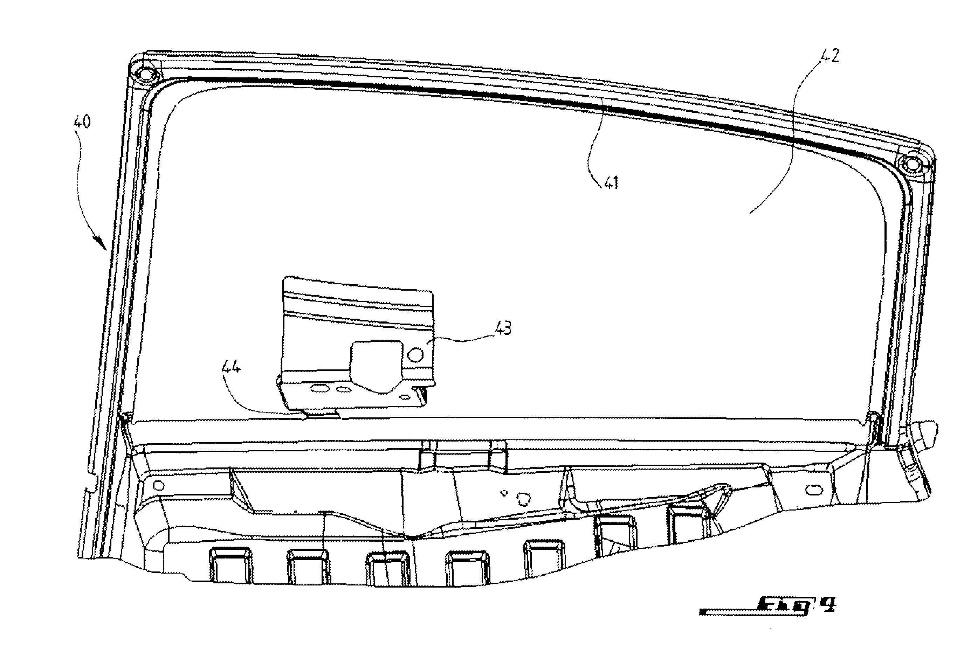

La figure 4 montre une panoplie de pièces 40 comprenant un encadrement de porte arrière 41 avec un évidement 42. La matière destinée à être enlevée, par emboutissage, pour former l'évidement 42 est utilisée en partie pour réaliser un renfort de serrure 43 de porte arrière. Le renfort de serrure 43 reste attaché à l'encadrement de porte 41 par une patte de fixation 44.

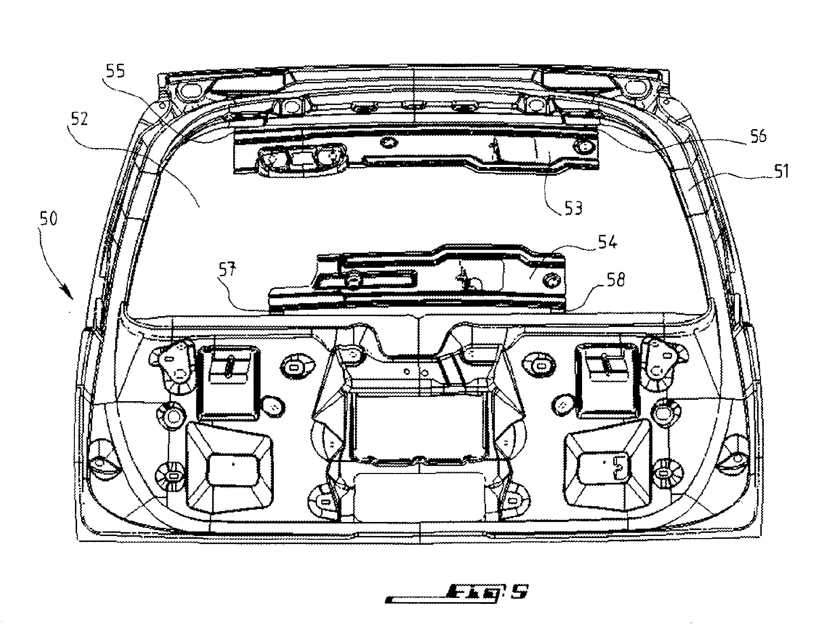

La figure 5 montre une panoplie de pièces 50 dont les pièces sont destinées à un volet arrière d'un véhicule automobile. Le volet arrière lui-même étant essentiellement constitué par une pièce d'aspect, il ne se prête pas à former, avec d'autres pièces, une panoplie de pièces. Contrairement à cela, les éléments de doublage et de raidissement se prêtent très bien à être emboutis ensemble de manière à former une panoplie de pièces selon l'invention. Ainsi, la panoplie de pièces 50 comprend une doublure de volet arrière 51 avec un évidement 52, un raidisseur horizontal central droit 53 et un raidisseur horizontal central gauche 54. Les raidisseurs 53 et 54 restent attachés à la doublure 51 respectivement par des pattes 55, 56 et 57, 58.

## Revendications

1. Procédé de réalisation d'au moins deux pièces (11, 13) embouties pour l'assemblage d'au moins une partie d'un véhicule automobile,
**caractérisé en ce que** les pièces (11, 13) sont réalisées à l'emboutissage dans un même outillage et de manière à former ensemble une panoplie (10) de pièces embouties non entièrement séparées pour pouvoir être transportées comme un élément monolithique et pour pouvoir être séparées seulement au moment de l'assemblage, par un moyen appartenant à des moyens d'assemblage.

2. Procédé selon la revendication 1, **caractérisé en ce que** les pièces (11, 13) sont réalisées de manière à être reliées les unes aux autres au sein de la panoplie (10) par des pattes de fixation (16, 17) dont la longueur se limite à un strict minimum nécessaire pour pouvoir séparer les pièces sans les déformer.

3. Panoplie de pièces embouties obtenue par un procédé de réalisation selon la revendication 1 ou 2, **caractérisé en ce qu'**elle comprend au moins deux pièces embouties (11, 13) non entièrement séparées et destinées à former ensemble, après assemblage, une partie d'un véhicule automobile, les pièces étant conformées pour pouvoir être séparées seulement au moment de l'assemblage par un moyen appartenant à des moyens d'assemblage.

4. Panoplie selon la revendication 3, **caractérisé en ce que** les pièces (11, 13) sont reliées les unes aux autres au sein de la panoplie (10) par des pattes de fixation (16, 17) dont la longueur se limite à un strict minimum nécessaire pour pouvoir séparer les pièces sans les déformer.

5. Panoplie selon la revendication 3 ou 4, **caractérisé en ce qu'**elle comprend, pour un capot d'un véhicule automobile, une doublure de capot (11), un raidisseur de capot (13), un renfort d'articulation droit (14) de capot et un renfort d'articulation gauche (15) de capot.

6. Panoplie selon la revendication 3 ou 4, **caractérisé en ce qu'**elle comprend, pour une porte d'un véhicule automobile, un encadrement de porte (21), un renfort de serrure (23) de porte et un support (24) de lève-vitre de porte.

7. Panoplie selon la revendication 3 ou 4, **caractérisé en ce qu'**elle comprend, pour une porte avant d'un véhicule automobile, un encadrement de porte avant (31), un renfort de serrure (33) de porte avant et un support (34) de lève-vitre de porte avant.

8. Panoplie selon la revendication 3 ou 4, **caractérisé en ce qu'**elle comprend, pour une porte arrière d'un véhicule automobile, un encadrement de porte arrière (41) et un renfort de serrure (43) de porte arrière.

9. Panoplie selon la revendication 3 ou 4, **caractérisé en ce qu'**elle comprend, pour un volet arrière d'un véhicule automobile, une doublure de volet arrière (51), un raidisseur horizontal central droit (53) de volet arrière et un raidisseur horizontal central gauche (54) de volet arrière.
